# EUROPÄISCHE PATENTSCHRIFT

(11) **EP 0 637 029 B1**
(45) Veröffentlichungstag und Bekanntmachung des Hinweises auf die Patenterteilung: **14.11.2001**
(21) Anmeldenummer: 94107238.1
(22) Anmeldetag: 09.05.1994
(51) Int. Cl.: G11C 5/00, G06F 17/60

(54) **Einrichtung mit Selbstauskunft und Verfahren zu deren Herstellung**
Autorecognition device and fabrication method
Dispositif d'autoreconnaissance et méthode de fabrication

(30) Priorität: 23.07.1993 DE 4324870
(43) Veröffentlichungstag der Anmeldung: 01.02.1995
(73) Patentinhaber: Weidmüller Interface GmbH & Co., 32760 Detmold (DE)
(72) Erfinder: Hanke, Thomas, D-33100 Paderborn-Benhausen (DE); Matthias, Jürgen, D-32758 Detmold (DE); Pampel, Jürgen, D-32107 Bad-Salzuflen (DE)
(74) Vertreter: TER MEER STEINMEISTER & PARTNER GbR

(56) Entgegenhaltungen:
- EP-A- 0 258 869
- EP-A- 0 491 255
- EP-A- 0 552 078
- FR-A- 2 677 148
- GB-A- 2 031 164
- US-A- 4 839 875
- PATENT ABSTRACTS OF JAPAN vol. 8, no. 18 (P-250) (1455) 26. Januar 1984 & JP-A-58 176 735 (FUJITSU)

## Beschreibung

Die Erfindung betrifft eine Einrichtung gemäß dem Oberbegriff des Patentanspruchs 1, die mit Hilfe eines Computers konstruiert worden ist. Ferner bezieht sich die Erfindung auf ein Verfahren zur Herstellung einer derartigen Einrichtung gemäß dem Oberbegriff des Patentanspruchs 10.

Heutzutage werden mehr und mehr Einrichtungen, seien es z. B. elektrische oder mechanische, mit Hilfe von CAD/CAE-Systemen entworfen. Trotzdem werden nach wie vor gedruckte Unterlagen erstellt, die Auskunft z. B. über Aufbau, Eigenschaften und Verwendungszweck der Einrichtung geben und nach Fertigstellung der Einrichtung dieser zugeordnet werden.

So ist im Innern eines Schaltschranks immer noch ein gedruckter Schaltplan zu finden, um zum Beispiel einem Monteur auf einer Baustelle den Anschluß des Schaltschranks an ein vorhandenes Netz zu erleichtern. Üblicherweise werden dabei wenigstens die mit dem Netz zu verbindenden Leitungen schon zuvor bei der Montage des Schaltschranks markiert, um eine einfachere Zuordnung zu Leitungen im Schaltplan zu ermöglichen. Diese Markierung ist aber relativ zeitaufwendig und verteuert daher die Herstellung des Schaltschranks ganz erheblich.

Auch rein mechanisch aufgebauten Anlagen liegt meistens ein gedruckter Konstruktionsplan bei, damit man sich bei der Montage oder Wartung an Ort und Stelle ein Bild über den Aufbau der Einrichtung machen kann.

Ebenso dienen Typenschilder dazu, Auskunft über Aufbau und Eigenschaften von Einrichtungen zu geben und müssen zunächst aufwendig hergestellt und dann mit der Einrichtung verbunden werden.

In all den genannten Fällen ist es für eine Monteur insbesondere bei umfangreicheren Schaltungs- oder Konstruktionsplänen ausgesprochen aufwendig, die jeweils relevanten Bereiche im Plan aufzufinden. Darüber hinaus lassen sich die Pläne bei einer ggf. erforderlichen Änderung der Einrichtung nur in umständlicher Weise anpassen, was insbesondere für Typenschilder zutrifft. Eine derartige Änderung könnte sich z. B. durch einen Umbau, einer Erweiterung, den Austausch von Teilen bei einer erforderlichen Reparatur durch andere, ähnliche Teile, usw., ergeben.

Erst recht sind die vorhandenen Schaltungs- oder Konstruktionspläne ungeeignet, größere Datenmengen aufzunehmen, die bei Diagnosen, Zustandsüberwachungen oder Funktionsüberwachungen der Einrichtungen anfallen. Derartige Daten müßten getrennt von den Schaltungs- bzw. Konstruktionsplänen gespeichert werden, also in einem anderen Medium, wodurch es noch schwieriger wird, sich einen Überblick über Aufbau und Zustand der Einrichtung zu verschaffen.

Aus der EP O 258 869 A2, die ein Verfahren und eine Vorrichtung zum Bonden betrifft, ist eine Halbleitereinrichtung bekannt, die mit Hilfe eines Computers konstruiert worden ist. Die Halbleitereinrichtung umfaßt dabei einen mit Hilfe eines CAD-Verfahrens entworfenen Chip, der mit entsprechenden Außenkontakten, die ebenfalls mit einem CAD-Verfahren konstruiert wurden, durch Bonddrähte verbunden wird. Nach dem Bonden wird diese bekannte, mit Hilfe eines Computers konstruierte Einrichtung in üblicher Weise gekapselt und so ihrem bestimmungsgemäßen Gebrauch zugeführt.

Die GB 2 031 164 A beschreibt ein automatisches Diagnosesystem für Fahrzeuge, insbesondere für als öffentliche Verkehrsmittel (Busse) genutzte Fahrzeuge, die eine Vielzahl von elektronischen Fühlervorrichtungen aufweisen. Um auch auf während des Betriebs eines derartigen Fahrzeugs von den Fühlereinrichtungen erfaßte und in zugeordneten Speichern gespeicherte Betriebsdaten für Diagnose- und Wartungszwecke zugreifen zu können, ist ein Diagnoseausgang vorgesehen, über den die entsprechenden Betriebsdaten ausgelesen werden können.

Abgesehen davon, daß es hier völlig offen bleibt, wie dieses bekannte Fahrzeug konstruiert wurde, werden hier die Konstruktionsdaten für Wartungszwecke getrennt vom Fahrzeug und damit getrennt von den im Fahrzeug gespeicherten Betriebsdaten gespeichert.

Der Erfindung liegt die Aufgabe zugrunde, bei einer Einrichtung der eingangs genannten Art dafür zu sorgen, daß alle sie beschreibenden Daten nicht nur an einer leicht zugänglichen Stelle aufbewahrt werden, sondern auch auf nur einem Datenträger zusammengefaßt und Teile davon in einfacher Weise aufgesucht und gegebenenfalls geändert werden können.

Diese Aufgabe wird durch die Einrichtung nach Anspruch 1 gelöst. Vorteilhafte Ausgestaltungen der Erfindung sind in den Ansprüchen 2 bis 9 beschrieben.

Ein bevorzugtes Verfahren zur Herstellung einer erfindungsgemäßen Einrichtung ist in Anspruch 10 angegeben, während Anspruch 11 ein Verfahren zum Bereitstellen und Aktualisieren von Daten als Geräteinformationen betrifft, die eine nach dem erfindungsgemäßen Verfahren hergestellte Einrichtung mit Diagnoseausgang beschreiben.

Der Begriff Einrichtung ist hier ganz allgemein zu verstehen und kann sich beispielsweise auf Schaltanlagen, Schaltschränke, Steuerungen, also auf elektrische Einrichtungen, aber auch auf mechanische Einrichtungen wie zum Beispiel Maschinen, Getriebe und dergleichen beziehen. Im Datenträger lassen sich dabei Schaltpläne, Wartungshinweise, Herstellerangaben, Geräte- und Bauteileidentifikationen, Verdrahtungsinformationen, aber auch Anschlußbezeichnungen, Pol- und Pinbelegungen, Leiter- und Kabelmarkierungen und weiteres mehr speichern.

Ein Monteur, der beispielsweise die Einrichtung anschließen, montieren oder warten will, braucht somit lediglich den an geeigneter Stelle an der Einrichtung befestigten Datenträger von der Einrichtung abzunehmen und in das weitere elektronische Gerät einzuführen, um gewünschte Daten aus dem Datenträger auslesen zu können. Er kann sich daher sehr schnell einen Überblick über das Innenleben bzw. den Betriebszustand der Einrichtung verschaffen, beispielsweise auch unter Benutzung eines zum weiteren elektronischen Gerät gehörenden Bildschirms. Durch entsprechende Betätigung des weiteren elektronischen Gerätes können dann bestimmte Bereiche aus einem gespeicherten Schaltplan, Leitungsmarkierungen von mit einer Klemmleiste verbundenen Leitern, usw., aufgerufen werden. Im zuletzt genannten Fall könnte sogar eine Markierung der einzelnen Leiter bei der Montage der Einrichtung entfallen, was zu Zeit- und damit zu Kosteneinsparungen führen würde.

Auch zu Service-, Reparatur-, Revisions-, Umbau- und Erweiterungszwecken kann jede abgespeicherte Information mit Hilfe des vor Ort zentral hinterlegten Datenträgers und unter Verwendung des weiteren elektronischen Geräts ausgelesen und visualisiert werden, wobei eine individuelle Zuordnung über geeignete Identifikationsmerkmale erfolgt.

Als elektronische Massenspeicher kommen beispielsweise Speicherchips in Frage, aber auch optische oder magnetooptische Speicher oder rein magnetische Speicher. Vorzugsweise können die elektronischen Massenspeicher auch in einer Karte gehalten werden, die dann in einen Schlitz des weiteren elektronischen Geräts einführbar wäre.

Nach einer vorteilhaften Weiterbildung der Erfindung sind in den elektronischen Massenspeicher auch Daten mittels des weiteren elektronischen Geräts eingebbar. Dadurch lassen sich die die Einrichtung beschreibenden Daten in einfacher Weise verändern, wenn dies durch Umbau, Erweiterung oder andere Maßnahmen in Bezug auf die Einrichtung notwendig werden sollte.

Vorteilhafterweise kann die Einrichtung einen Diagnoseausgang aufweisen, der mit einem Eingang des weiteren elektronischen Geräts verbindbar ist. Über diesen Diagnoseausgang können Berichte über den Zustand der Einrichtung an das weitere elektronische Geräte gegeben werden, wobei diese Berichte Grundlage für eine Veränderung der Daten auf dem Datenträger sein können. Die auf dem Datenträger vorhandenen Daten lassen sich somit in einfacher Weise auf dem neuesten Stand halten.

Besonders vorteilhaft ist es, wenn das weitere elektronische Gerät, das ggf. einen Bildschirm aufweisen kann, tragbar ist. Bei größeren Einrichtungen läßt sich das weitere elektronische Gerät dann zu der Einrichtung bringen, so daß unmittelbar vor Ort der Datenträger auslesbar ist und sein Dateninhalt ggf. verändert werden kann.

Dem erfindungsgemäßen Verfahren entsprechend wird eine Einrichtung der genannten Art unter Verwendung eines Computers entworfen bzw. konstruiert. Hierzu kommen CAD/CAE-Systeme zum Einsatz. Dabei werden zunächst alle die Einrichtung beschreibende Daten im Computer bzw. im CAD/CAE-System gespeichert. Nach der Erfindung werden diese Daten dann aus dem Computer ausgelesen und ggf. konvertiert und komprimiert, um schließlich in einen vom Computer getrennt handhabbaren elektronischen Massenspeicher eingelesen zu werden. Dieser elektronische Massenspeicher wird nach Fertigstellung der Einrichtung mit ihr lösbarverbunden, und zwar an einer zentralen Stelle der Einrichtung. Im Falle eines kartenförmigen Datenträgers wäre hierzu beispielsweise an oder: innerhalb der Einrichtung eine entsprechende Tasche zur Aufnahme des Kartenträgers vorhanden.

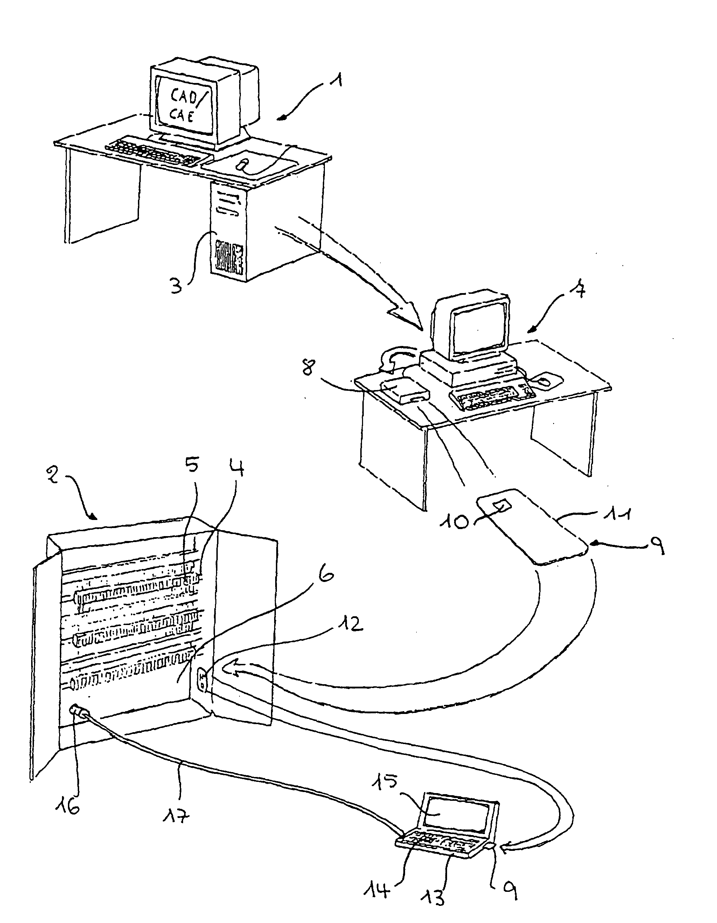

Ein Ausführungsbeispiel der Erfindung wird nachfolgend unter Bezugnahme auf die einzige Figur näher beschrieben.

Mit Hilfe eines CAD/CAE-Systems 1 wird zunächst eine Einrichtung, im vorliegenden Fall als Beispiel ein Schaltschrank 2, entworfen bzw. konstruiert. Der Entwurf bzw. die entsprechenden Konstruktionspläne werden in elektronischer Form in einem Speicher3 des CAD/CAE-Systems abgelegt. Anhand der Entwurfs- bzw. Konstruktionspläne läßt sich dann in konventioneller Weise der Schaltschrank 2 fertigen, der vorliegend u. a. auch mehrere Klemmleisten 4 mit darauf befestigten Leiterverbindern 5 aufweist. Daneben können auf einer Grundplatte 6 des Schaltschranks 2 weitere elektrische Geräte bzw. Baueinheiten montiert sein.

Die Daten aus dem Speicher 3 des CAD/CAE-Systems 1 lassen sich darüber hinaus über eine nicht dargestellte Leitungsverbindung zu einem Computerarbeitsplatz 7 übertragen, um hier mittels einer mit dem Computerarbeitsplatz 7 in Verbindung stehenden Schreibeinheit 8 Daten in einen Datenträger 9 einschreiben zu können, der in die Schreibeinheit 8 zu diesem Zweck eingeführt wird. Der Datenträger 9 besteht aus einem chipförmigen elektronischen Massenspeicher 10, der in einer Karte 11 untergebracht ist.

Mit anderen Worten gelangen auf diese Weise in den elektronischen Massenspeicher 10 sämtliche Daten aus dem Speicher 3, die zur Beschreibung des Aufbaus oder der Eigenschaften des Schaltschranks 2 erforderlich sind und vorher durch den Operator des CAD/CAE-Systems 1 definiert wurden. Nur beispielsweise sei erwähnt, daß diese Daten auch Markierungsinformationen für einzelne Bauelemente oder Leiter des Schaltschranks 2 enthalten können, so daß es nicht mehr erforderlich ist, diese Bauelemente bzw. Leiter bei der Montage des Schaltschranks 2 in herkömmlicher Weise durch Aufkleber, bedruckte Hüllen, und dergleichen, zu markieren. Ansonsten befinden sich im Massenspeicher 10 u. a. Anschlußbezeichnungen, Pol- und Pinbelegungen, Geräte- und Bauteileidentifikationen, Verdrahtungsinformationen, Schaltpläne, Wartungshinweise, Herstellerangaben, und dergleichen.

Der Datenträger 9 wird, nachdem die gewünschten Daten mittels der Schreibeinheit 8 in den elektronischen Massenspeicher 10 eingeschrieben worden sind, aus der Schreibeinheit 8 herausgenommen und innerhalb des Schaltschranks 2 an zentraler Stelle befestigt, wozu im vorliegenden Fall an der inneren Seite einer Schaltschrankwand eine Tasche 12 vorgesehen ist, in die der Datenträger 9 hineingesteckt wird.

In diesem Zustand wird beispielsweise der Schaltschrank 2 zum Montageort geliefert. Dort wird der Datenträger 9 aus der Tasche 12 herausgenommen und in ein mitgebrachtes weiteres elektronisches Gerät 13 hineingesteckt. Dieses elektronische Gerät 13 liest den Dateninhalt des Massenspeichers 10 aus, wozu Tasten eines Tastenfelds 14 des Geräts 13 entsprechend betätigt werden können. Gewünschte Daten aus dem elektronischen Massenspeicher 10 können somit auf einem Bildschirm 15 des Geräts 13 abgebildet werden, das z. B. ein Laptop mit Kartenleser sein kann.

Bei diesen Daten kann es sich z. B. um die Bezeichnungen der Leiterverbinder 5 handeln, so daß jetzt am Montageort entschieden werden kann, welche der am Montageort vorhandenen Leitungen mit welchen der Leiterverbinder 5 verbunden werden können. Selbstverständlich lassen sich auf dem Bildschirm 15 auch Teile des Schaltplans des Schaltschranks 2, usw., darstellen, wie bereits erwähnt.

Nimmt der Monteur am Montageort Änderungen im Schaltschrank 2 vor, beispielsweise Änderungen hinsichtlich der Belegung der Leiterverbinder 5, so kann eine entsprechende Information über das Tastenfeld 14 in das elektronische Gerät 13 eingegeben werden, was eine entsprechende Ände rung der Information im elektronischen Massenspeicher 10 zur Folge hat. Die ursprünglich im Massenspeicher 10 gespeicherten Daten werden somit auf den neuesten Stand gebracht.

Die Figur läßt ebenfalls erkennen, daß für den Fall, daß der Schaltschrank 2 einen Diagnoseausgang 16 aufweist, dieser Diagnoseausgang 16 über eine entsprechende Leitung 17 auch mit dem weiteren elektronischen Gerät 13 verbunden werden kann. Über den Diagnoseausgang 16 lassen sich z. B. durch Zustandsüberwachungen oder durch Funktionsüberwachungen erhaltene Daten, die In einem elektronischen Speicher des Schaltschranks 2 auch zwischengespeichert werden können, zum weiteren elektronischen Gerät 13 übertragen, wobei durch diese Daten auch Protokolle gebildet werden können. Diese Daten bzw. Protokolle lassen sich dann, falls erforderlich, wiederum im elektronischen Massenspeicher 10 des Datenträgers 9 ablegen, um auf diese Weise über einen längeren Zeitraum Betriebszustandsdaten, oder dergleichen zu sammeln.

## Patentansprüche

1. Einrichtung (2), die mit Hilfe eines Computers (1, 3) konstruiert worden ist, mit einem zugeordneten Datenträger (9, 10, 11), der als elektronischer Massenspeicher ausgebildet und durch ein weiteres elektronisches Gerät (13) auslesbar ist, wobei
- im Datenträger (9, 10, 11) die Einrichtung (2) beschreibende Daten, die beim Konstruieren der Einrichtung im Computer (1, 3) benutzt und erzeugt wurden, gespeichert sind, und
- **dadurch gekennzeichnet, daß** der Datenträger (9, 10, 11) lösbar mit der Einrichtung (2) verbunden ist, so daß er zum Auslesen durch das weitere elektronische Gerät (13) von ihr trennbar ist.

2. Einrichtung nach Anspruch 1, **dadurch gekennzeichnet, daß** der elektronische Massenspeicher (10) ein Speicherchip ist.

3. Einrichtung nach Anspruch 1, **dadurch gekennzeichnet, daß** der elektronische Massenspeicher (10) ein optischer oder magnetooptischer Speicher ist.

4. Einrichtung nach Anspruch 1, **dadurch gekennzeichnet, daß** der elektronische Massenspeicher (10) ein magnetischer Speicher ist.

5. Einrichtung nach einem der Ansprüche 2 bis 4, **dadurch gekennzeichnet, daß** der elektronische Massenspeicher (10) in einer Karte (11) gehalten ist.

6. Einrichtung nach einem der Ansprüche 1 bis 5, **dadurch gekennzeichnet, daß** in den elektronischen Massenspeicher (10) Daten mittels des weiteren elektronischen Geräts (13) eingebbar sind.

7. Einrichtung nach Anspruch 6, **dadurch gekennzeichnet, daß** sie einen Diagnoseausgang (16) aufweist, der mit einem Eingang des weiteren elektronischen Geräts (13) verbindbar ist.

8. Einrichtung nach einem der Ansprüche 1 bis 7, **dadurch gekennzeichnet, daß** das weitere elektronische Gerät (13) tragbar ist.

9. Einrichtung nach einem der Ansprüche 1 bis 8, **dadurch gekennzeichnet, daß** sie als elektrische Anlage ausgebildet ist.

10. Verfahren zur Herstellung einer Einrichtung (2), bei dem
- die Einrichtung (2) unter Verwendung eines Computers (1, 3) konstruiert wird, wobei die Einrichtung (2) beschreibende Daten im Computer (1, 3) gespeichert werden,
- diese Daten aus dem Computer (1, 3) in einen vom Computer (1, 3) getrennt handhabbaren, der Einrichtung (2) zugeordneten Datenträger (9, 10, 11) eingelesen werden, der als elektronischer Massenspeicher ausgebildet und durch ein weiteres elektronisches Gerät (13) auslesbar ist, und
**dadurch gekennzeichnet, daß**
- der der Einrichtung (2) zugeordnete Datenträger (9, 10, 11) nach Fertigstellung der Einrichtung (2) mit ihr lösbar verbunden wird.

11. Verfahren zum Bereitstellen und Aktualisieren von Daten als Geräte-informationen, die eine nach dem Verfahren nach Anspruch 10 hergestellte Einrichtung mit einem Diagnoseausgang (16) beschreiben, **dadurch gekennzeichnet, daß**
a) der Datenträger (9, 10, 11) zu Montage- oder Wartungszwecken von der Einrichtung (2) getrennt und mit dem elektronischen Gerät (13) zum Lesen oder Beschreiben verbunden wird, und
b) das elektronische Gerät (13) mit dem Diagnoseausgang (16) die Einrichtung (2) verbunden wird,
c) so daß zur Aktualisierung der die Einrichtung (2) beschreibenden Daten über den Diagnoseausgang (16) erhaltene Betriebszustandsdaten und weitere die durchzuführenden Arbeiten betreffende Daten in den Datenträger (9) eingeschrieben werden können.

## Claims

1. Device (2) which has been constructed with the aid of a computer (1, 3), with an assigned data carrier (9, 10, 11), which is designed as an electronic mass storage device and can be read by a further electronic device (13),
- data describing the device (2), which has been used and generated during the construction of the device in the computer (1, 3), being stored in the data carrier (9, 10, 11),
**characterized in that**
- the data carrier (9, 10, 11) is releasably connected to the device (2), so that it can be separated from it for reading by the further electronic device (13).

2. Device according to Claim 1, **characterized in that** the electronic mass storage device (10) is a memory chip.

3. Device according to Claim 1, **characterized in that** the electronic mass storage device (10) is an optical or magnetooptical memory.

4. Device according to Claim 1, **characterized in that** the electronic mass storage device (10) is a magnetic memory.

5. Device according to one of Claims 2 to 4,
**characterized in that** the electronic mass storage device (10) is held in a card (11).

6. Device according to one of Claims 1 to 5,
**characterized in that** data can be entered into the electronic mass storage device (10) by means of the further electronic device (13).

7. Device according to Claim 6, **characterized in that** it has a diagnostic output (16), which can be connected to an input of the further electronic device (13).

8. Device according to one of Claims 1 to 7,
**characterized in that** the further electronic device (13) is portable.

9. Device according to one of Claims 1 to 8,
**characterized in that** it is designed as an electrical installation.

10. Method of producing a device (2), in which
- the device (2) is constructed using a computer (1, 3), data describing the device (2) being stored in the computer (1, 3), and
- these data are read from the computer (1, 3) into a data carrier (9, 10, 11), which can be handled separately from the computer (1, 3), is assigned to the device (2), is designed as an electronic mass storage device and can be read by a further electronic device (13),
**characterized in that**
- the data carrier (9, 10, 11) assigned to the device (2) is releasably connected to the device (2) once the latter has been completed.

11. Method of providing and updating data as equipment information which describes a device produced by the method according to Claim 10, with a diagnostic output (16), **characterized in that**
a) for assembly or maintenance purposes, the data carrier (9, 10, 11) is disconnected from the device (2) and connected to the electronic device (13) for reading or writing, and
b) the electronic device (13) is connected to the diagnostic output (16) of the device (2),
c) so that data on the operating state, received via the diagnostic output (16), and further data concerning the work to be carried out can be written to the data carrier (9) for updating the data describing the device (2).

## Revendications

1. Dispositif (2) qui est élaboré à l'aide d'un ordinateur (1, 3) avec un support de données associé (9, 10, 11) constituant une mémoire électronique de masse susceptible d'être lue au moyen d'un appareil électronique supplémentaire (13), dans lequel :
- dans le support de données (9, 10, 11), les données décrivant le dispositif (2) qui sont exploitées et créées par l'ordinateur (1, 3) lors de l'élaboration du dispositif, sont stockées ; et
**caractérisé en ce que** :
- le support de données (9, 10, 11) est relié de façon amovible avec le dispositif (2) de façon à être séparable de celui-ci pour la lecture au moyen de l'appareil électronique (13).

2. Dispositif selon la revendication 1, **caractérisé en ce que** la mémoire électronique de masse (10) est une puce mémoire.

3. Dispositif selon la revendication 1, **caractérisé en ce que** la mémoire électronique de masse (10) est une mémoire optique ou magnéto-optique.

4. Dispositif selon la revendication 1, **caractérisé en ce que** la mémoire électronique de masse (10) est une mémoire magnétique.

5. Dispositif selon l'une quelconque des revendications 2 à 4, **caractérisé en ce que** la mémoire électronique de masse (10) est contenue dans une carte (11).

6. Dispositif selon l'une quelconque des revendications 1 à 5, **caractérisé en ce que** des données peuvent être introduites, au moyen de l'appareil électronique supplémentaire (13), dans la mémoire de masse électronique (10).

7. Dispositif selon la revendication 6, **caractérisé en ce qu'**il présente une sortie de diagnostic (16) susceptible d'être reliée à l'entrée de l'appareil électronique supplémentaire (13).

8. Dispositif selon l'une quelconque des revendications 1 à 7. **caractérisé en ce que** l'appareil électronique supplémentaire (13) est portable.

9. Dispositif selon l'une quelconque des revendications 1 à 8, **caractérisé en ce que** le dispositif est réalisé sous forme d'une installation électrique.

10. Procédé de fabrication d'un dispositif (2), dans lequel :
- le dispositif (2) est réalisé avec l'utilisation d'un ordinateur (1, 3), les données décrivant le dispositif (2) étant stockées dans un ordinateur (1, 3) ;
- les données venant de l'ordinateur (1, 3) sont introduites dans un support de données (9, 10, 11) associé au dispositif (2) susceptible d'être manipulé indépendamment de l'ordinateur (1, 3), réalisé sous forme d'une mémoire de masse électronique susceptible d'être lue au moyen d'un appareil électronique supplémentaire (13) ; et
**caractérisé en ce que**
- le support de données (9, 10, 11) associé au dispositif (2) est relié, après la fabrication du dispositif (2) avec ce dernier de façon amovible.

11. Procédé de mise à disposition et de mise à jour de données en tant qu'informations d'appareil, décrivant un dispositif muni d'une sortie de diagnostic (16) obtenu par le procédé selon la revendication 10, **caractérisé en ce que**
a) le support de données (9, 10, 11) est séparé pour des finalités de montage ou de maintenance du dispositif (2) pour être relié à l'appareil électronique supplémentaire (13) pour lecture ou écriture ; et
b) l'appareil électronique (13) est relié au dispositif (2) au moyen de la sortie de diagnostic (16) ;
c) de sorte que, pour la mise à jour des données décrivant le dispositif (2) via la sortie de diagnostic (16), les données obtenues concernant l'état de fonctionnement ainsi que d'autres données concernant les travaux à réaliser peuvent être écrites dans le support de données (9).
